Europäisches Patentamt

European Patent Office

Office européen des brevets

(11) Veröffentlichungsnummer: **0 033 972**
**A1**

(12) # EUROPÄISCHE PATENTANMELDUNG

(21) Anmeldenummer: 81100905.9

(22) Anmeldetag: 09.02.81

(51) Int. Cl.³: **F 23 G 5/00,** F 27 D 3/10,
B 01 J 8/00, B 65 G 69/18

(30) Priorität: 07.02.80 DE 3004557

(71) Anmelder: **Deutsche Kommunal-Anlagen Miete GmbH,
Arnulfstrasse 44, D-8000 München 2 (DE)**

(43) Veröffentlichungstag der Anmeldung: **19.08.81
Patentblatt 81/33**

(72) Erfinder: **Flick, Jürgen, Rösrather Strasse 57,
D-5204 Lohmar (DE)**
Erfinder: **Kleven, Leo, Antoniusstrasse 20,
D-5010 Bergheim (DE)**

(74) Vertreter: **Hartmann, Günter, Dr. Dipl.-Chem.,
St.-Anna-Strasse 15, D-8000 München 22 (DE)**

(84) Benannte Vertragsstaaten: **BE**

(54) **Vorrichtung zum Beschicken eines Ofens, insbesondere Drehrohrofens, mit zu verbrennendem Gut, insbesondere Abfällen.**

(57) Vorrichtung mit einem Zuführungskanal (19), durch den mittels eines hin- und herbewegten Stössels (17) das über einen Füllbehälter (1) in den Zuführungskanal (19) eingebrachte Gut dem Ofen zugeführt wird, und mit Dichtungseinrichtungen (5, 9), die ein Eindringen und/oder Entweichen von Gasen in den Ofen bzw. aus dem Ofen verhindern, in der zusätzlich zum Füllbehälter (1) ein Schüttbehälter (2) vorgsehen ist, der zwischen einer über dem Füllbehälter (1) liegenden Entladestelling und einer seitlich vom Füllbehälter (1) liegenden Beladestelling hin- und herbewegbar ist und am Boden eine verschliessbare Schüttöffnung (3) und einen sowohl die nach oben gerichtete Füllöffnung (4) des Füllbehälters als auch die Schüttöffnung (3) des Schüttbehälters umfassenden Tauchverschluss (5) aufweist, der mit seinem umlaufenden Tauchrand (6) in eine die nach oben gerichtete Füllöffnung (4) des Füllbehälters (1) umfassende Sperrflüssigkeit (7) sowohl beim Beladen des Schüttbehälters (2) mit dem zu behandelnden Gut bei dessen geschlossener Schüttöffnung (3) und beim Entladen des Gutes aus dem Schüttbehälter (2) durch die geöffnete Schüttöffnung (3) in den Füllbehälter (1) bei dichtverschlossener nach oben gerichteter Beladeöffnung (8) des Schüttbehälters (2) als auch bei der Hin- und Herbewegung des Schüttbehälters (2) zwischen diesen beiden Stellungen eingetaucht bleibt. Der zur Anwendung kommende Tauchverschluss (5) gewährleistet, dass das Füllbehälterinnere ständig gegenüber der Umgebung hermetisch abgedichtet ist und ausserdem wirkt er als Explosionskappe oder Berstmembrane.

## Vorrichtung zum Beschicken eines Ofens, insbesondere Drehrohrofens, mit zu verbrennendem Gut, insbesondere Abfällen

Die Erfindung betrifft eine Vorrichtung zum Beschicken eines Reaktors, insbesondere Drehrohrofens, mit thermisch zu behandelndem Gut, insbesondere Abfällen, mit einem Zuführungskanal, durch welchen mittels eines hin- und herbewegten Stößels das über einen Füllbehälter in den Zuführungskanal eingebrachte Gut dem Reaktor zugeführt wird und mit Dichtungseinrichtungen, die ein Eindringen und/oder Entweichen von Gasen in den bzw. aus dem Reaktor verhindern.

Insbesondere bei der thermischen Behandlung von Abfällen, z.B. durch Pyrolyse oder Verbrennen, können im Reaktor, insbesondere Ofen, Gase entstehen, die bei einer Temperatur oberhalb der Zündtemperatur bei Zutritt von Luftsauerstoff, welcher bevorzugt beim Beschicken des Reaktors in diesen eindringen kann, explosionsartig verbrennen. Darüber hinaus entstehen im Reaktor auch Schadgase, die daran gehindert werden müssen, daß sie in die Umgebungsluft gelangen. Diese Gefahr besteht ebenfalls beim Beschicken des Ofens mit dem zu behandelnden Gut.

Es sind daher Dichtungseinrichtungen bekanntgeworden, welche während des Beschickens des Reaktors gewährleisten sollen, daß Gase nach außen entweichen bzw. Luft und damit Luftsauerstoff in den Reaktor gelangt. Hierzu ist es bekanntgeworden, daß die Beschickung des Reaktors über einen selbstdichtenden Pfropfen, der aus dem zu behandelnden Gut im Zuführungskanal gebildet wird, erfolgt. Der selbstdichtende Pfropfen wird dabei vom hin- und herbewegbaren Stößel erzielt. Es wird eine hohe Stoßkraft für den Stößel benötigt, um den selbstdichtenden Pfropfen herzustellen. Ein derartiger selbstdichtender Pfropfen läßt sich jedoch nicht mit jeder Art von Abfällen herstellen. Beispielsweise Gummiabfälle können zu einem selbstdichtenden Pfropfen nicht verdichtet werden. Darüber

0033972

hinaus besteht die Gefahr der Brückenbildung durch Spreizen von Holzabfällen und dergl. im Zuführungskanal. Auch ergeben sich Schwierigkeiten bei der Herstellung des selbstdichtenden Pfropfens durch Abscheren sperriger Teile am Übergang vom Füllbehälter zum Zuführungskanal.

Darüber hinaus ist auch ein Schleusensystem mit Drehschiebern oder Flachschiebern bekanntgeworden, wobei an den gasdichten Betrieb der Schieber hohe Anforderungen zu stellen sind. Da bei der Beschickung des Reaktors, insbesondere Ofens aus diesem korrosiv wirkende Gase, Staub, Kondensationsprodukte und dergl. austreten, muß ein häufiger Wechsel der Schieberdichtungen vorgenommen werden. Insbesondere austretende Kondensationsprodukte führen zusammen mit Staub zu einem Verschmieren und Verbacken der Schieberkästen. Auch benötigt man eine relativ aufwendige Konstruktion, um ein betriebssicher wirkendes, gasdichtes Schleusensystem, durch das das thermisch zu behandelnde Gut in den Füllbehälter und den Zuführungskanal geschüttet werden soll, zu erzielen.

Bei der Beschickung über einen selbstdichtenden Pfropfen ergibt sich noch der Nachteil, daß der Pfropfen im Reaktor nur langsam auseinanderfällt, so daß der Pfropfen zunächst nur im Außenmantel erwärmt wird, während er innen noch kalt bleibt. Damit die Wärme gleich zu Beginn des Reaktors das zugeführte Gut insgesamt gleichmäßig erwärmt, ist daher eine lockere Beschickung des Ofens vorteilhaft. Da auf diese Weise der Reaktorraum besser ausgenutzt wird, wird entsprechend der Wirkungsgrad auch verbessert.

Aufgabe der Erfindung ist es daher, eine Vorrichtung zum Beschicken eines Reaktors der eingangs genannten Art zu schaffen, die bei der Beschickung des Reaktors eine hermetische Abdichtung mit weniger anfälligen Mitteln und damit einen längeren wartungsfreien Betrieb erlaubt.

9542

Diese Aufgabe wird erfindungsgemäß dadurch gelöst, daß zusätzlich zum Füllbehälter ein Schüttbehälter vorgesehen ist, der zwischen einer über dem Füllbehälter liegenden Entladestellung und einer seitlich vom Füllbehälter liegenden Beladestellung hin- und herbewegbar ist und am Boden eine verschließbare Schüttöffnung und einen sowohl eine nach oben gerichtete Füllöffnung des Füllbehälters als auch die Schüttöffnung des Schüttbehälters umfassenden Tauchverschluß aufweist, der mit seinem umlaufenden Tauchrand in eine die nach oben gerichtete Füllöffnung des Füllbehälters umfassende Sperrflüssigkeit sowohl beim Beladen des Schüttbehälters mit dem zu behandelnden Gut bei dessen geschlossener Schüttöffnung und beim Entladen des Gutes aus dem Schüttbehälter durch die geöffnete Schüttöffnung in den Füllbehälter bei dichtverschlossener nach oben gerichteter Beladeöffnung des Schüttbehälters als auch bei der Hin- und Herbewegung des Schüttbehälters zwischen diesen beiden Stellungen eingetaucht bleibt.

Der bei der Erfindung zur Anwendung kommende Tauchverschluß ist bedeutend weniger anfällig als die für die Schieber des Schleusensystems vorzusehenden Dichtungen beim Stand der Technik. Durch den Tauchverschluß wird gewährleistet, daß das Füllbehälterinnere ständig gegenüber der Umgebung hermetisch abgedichtet ist. Außerdem wirkt der Tauchverschluß bzw. die Tauchtasse als Explosionsklappe oder Berstmembrane.

Darüber hinaus läßt sich durch einen weiteren nur die Schüttöffnung des Schüttbehälters umfassenden Tauchverschluß, der in der Beladestellung des Schüttbehälters in die Sperrflüssigkeit eingetaucht ist, verhindern, daß beim Beladen des Schüttbehälters Gase durch die unteren Klappen des Schüttbehälters, die dann nicht gasdicht sein müssen, in die Beschickungsvorrichtung eindringen bzw. austreten.

Auch der Deckel, der zum Verschließen der Beladeöffnung des Schüttbehälters während des Entleerens des Schüttbehälters in der Entladestellung über dem Füllbehälter verwendet wird, kann mittels eines Tauchver-

9542

schlusses abgedichtet sein. Darüber hinaus ist es von Vorteil, den Schüttbehälter in entleertem Zustand vor dem Wiederbeladen als auch vor dem
Entladen über dem Füllbehälter zu spülen, um gegebenenfalls während des
Entladens des Schüttbehälters in diesen eingedrungene Ofengase zu beseitigen und die nach dem Beladen und Verschließen des Schüttbehälters
verbleibende Luft durch Inertgas weitgehend zu verdrängen.

Um im Füllbehälter eine Brückenbildung der Abfälle zu verhindern, können
in den schrägen Seitenwänden des Füllbehälters wie auch des Schüttbehälters
bewegbare Räumstößel vorgesehen sein, die wechselweise betätigt werden.

Darüber hinaus kann der Stößel an seinem vorderen Ende eine Ausnehmung
aufweisen, durch die gewährleistet wird, daß bei eingefahrenem Stößel
zwischen dem Stößel und dem Zuführungskanal ein oben liegender Freiraum
verbleibt, durch den verhindert wird, daß stückige Teile sich verklemmen.
Ferner wird der Stößel in den Zuführungskanal nur soweit eingefahren, daß
zwischen der Vorderkante des Vollstößels und dem Zuführungskanal ein
Abstand verbleibt, durch den ein Abscheren sperriger Teile an der Vorderkante des Zuführkanals verhindert wird. Die oben liegende Ausnehmung
an der Vorderkante des Stößels erfüllt somit eine Doppelfunktion, nämlich
sie ermöglicht zum einen, daß der Stößel über eine endliche Länge in den
Zuführungskanal hineingeführt werden kann, ohne daß ein Verklemmen mit
sperrigen  Teilen auftritt und zum andern läßt sich der Stößel nur soweit
mit der Ausnehmung in den Zuführungskanal einfahren, daß zwischen der
Vorderkante des Vollstößels und dem Zuführungskanal noch ein ausreichender Abstand verbleibt.

Um beim Zurückziehen des Stößels in die zurückgezogene Stellung zu verhindern, daß dabei aus dem in den Drehrohrofen gerichteten Teil des Zuführungsrohres Bestandteile des zu behandelnden Gutes mit dem zurückgeführten Stößel zurücktransportiert werden, kann während des Zurückführens des Stößels eine Abstreifeinrichtung, Beispiel in Form eines

9542

Rechens oder eines Niederhalters, in den Zuführungskanal eingeschoben werden.

Ferner kann die Sperrflüssigkeit des Tauchverschlusses bzw. der Tauchtasse beim Winterbetrieb beheizt werden, um ein Einfrieren zu verhindern. Die Beheizung kann mit den Ofenabgasen erfolgen oder auch mit einem Wärmeträger, wie Öl. Hierzu kann unterhalb der Abdichttasse eine entsprechende Schlange vorgesehen sein, durch die der Wärmeträger geführt wird.

In den beiliegenden Figuren ist ein Ausführungsbeispiel der Erfindung dargestellt. Anhand dieser Figuren soll die Erfindung noch näher erläutert werden. Es zeigen:

Fig. 1    eine schematische Darstellung einer Beschickungsvorrichtung, wobei der Schüttbehälter sich in seiner Beladestellung befindet,

Fig. 2    die in der Fig. 1 dargestellte Beschickungsvorrichtung, wobei der Füllbehälter in seiner Entladestellung sich befindet und

Fig. 3    eine Draufsicht auf die in den Fig. 1 und 2 dargestellte Beschickungsvorrichtung in der Entladestellung des Schüttbehälters.

Die in den Fig. schematisch dargestellte Beschickungsvorrichtung für einen nicht näher dargestellten Reaktor besitzt einen Füllbehälter 1, über welchen in einen Zuführungskanal 19 zu behandelndes Gut, beispielsweise Abfälle, eingebracht werden können. Mit Hilfe eines im Zuführungskanal 19 hin- und herbeweglichen Stößels 17 kann das im Zuführungskanal 19 befindliche Gut in den Reaktor eingebracht werden.

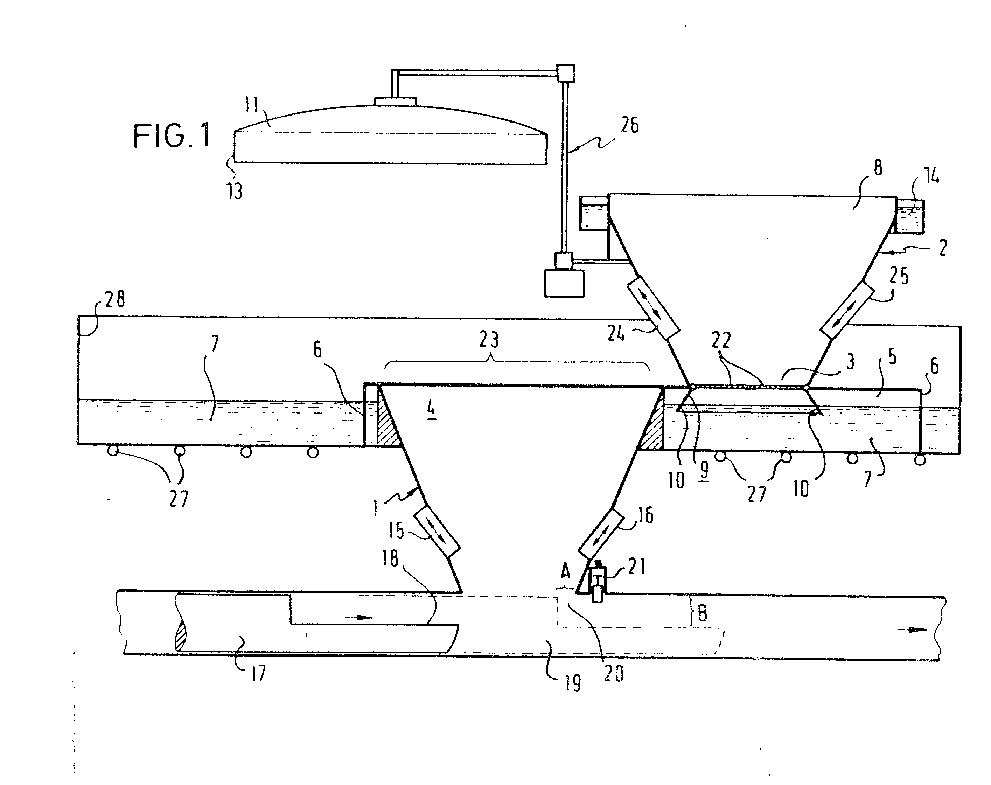

Ferner ist ein mittels einer Hub- und Schwenkeinrichtung 26 Schüttbehälter 2 vorgesehen, der in der in Fig. 1 gezeigten Stellung bei abgehobenem Deckel 11

9542

0033972

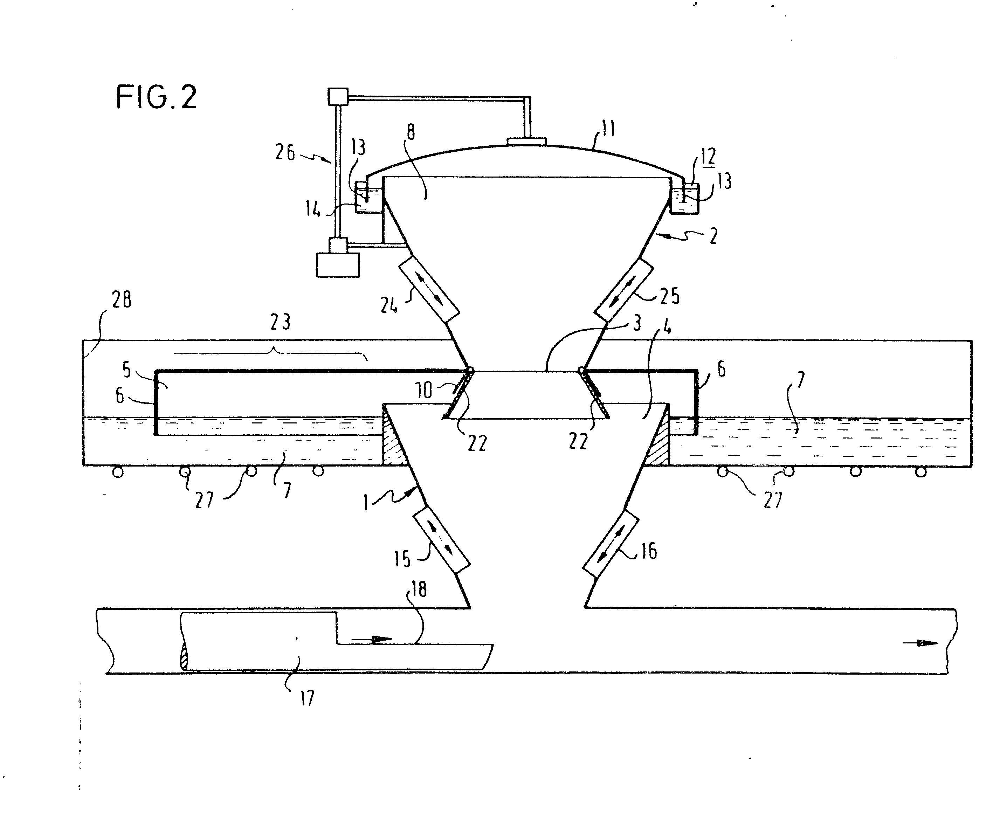

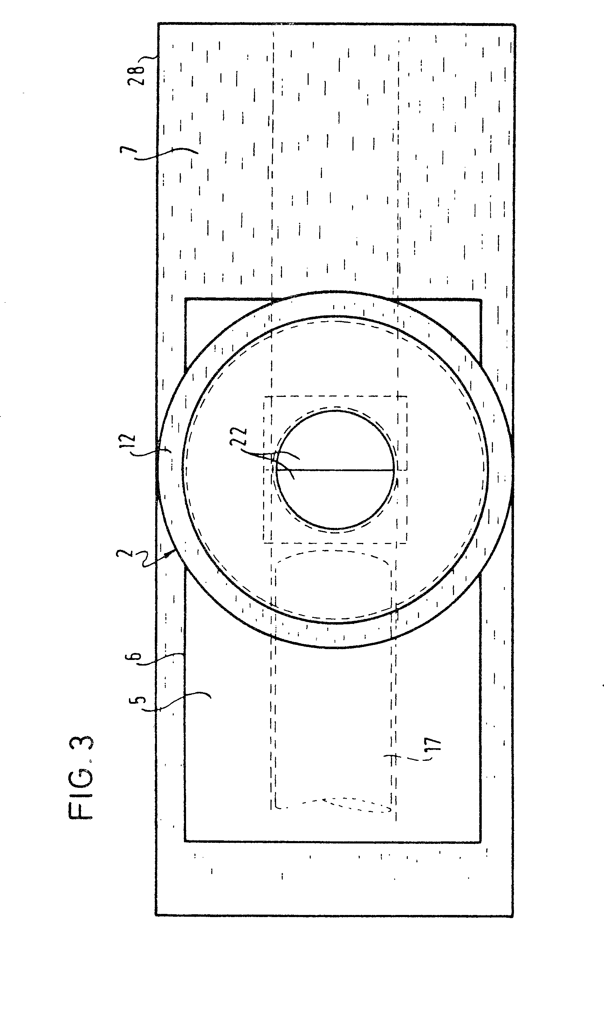

beladen werden kann. In der Beladestellung ist eine Schüttöffnung 3 mit Hilfe von Klappen 22 verschlossen. Die Klappen 22 werden in der Entladestellung, welche in den Fig. 2 und 3 gezeigt ist, nach unten geschwenkt, so daß die Schüttöffnung 3 frei wird und das in den Schüttbehälter 2 eingebrachte Gut in den Füllbehälter 1 entleert werden kann.

Am Schüttbehälter 2 ist ein Tauchverschluß 5 vorgesehen, der in eine Sperrflüssigkeit 7, die sich in einer Tauchtasse 28 befindet, mit seinem Tauchrand 6 eingetaucht ist. Die Sperrflüssigkeit 7 umgibt eine nach oben gerichtete Füllöffnung 4 des Füllbehälters 1, und diese Füllöffnung 4 wird auch vom Tauchverschluß 5 bzw. dessen Tauchrand 6 umfaßt. Wie aus den Fig. 1 und 2 zu ersehen ist, wird vom Tauchverschluß 5 die Füllöffnung 4 sowohl in der Beladestellung des Schüttbehälters 2 als auch in der Entladestellung des Schüttbehälters 2 abgedeckt. Diese Abdeckung bzw. dieser Verschluß nach außen bleibt auch aufrechterhalten während der Hin- und Herbewegung des Füllbehälters 2 zwischen der Beladestellung und der Entladestellung. Hierzu ist der Tauchverschluß 5 mit dem entsprechend bemessenen umlaufenden Tauchrand 6 ausgestattet, der immer in die Sperrflüssigkeit 7 eingetaucht bleibt, wobei bei der Eintauchtiefe die im Reaktor herrschenden Druckverhältnisse entsprechend zu berücksichtigen sind. Damit gewährleistet wird, daß der Tauchverschluß 5 auch in der in der Fig. 1 dargestellten Beladestellung des Schüttbehälters 2 die Füllöffnung 4 des Füllbehälters 1 abdeckt und nach außen abdichtet, besitzt der Tauchverschluß 5 ein entsprechend bemessenes Ansatzstück 23, durch das in der Fig. 1 gewährleistet wird, daß auch während des Beladens des Behälters 2 die Füllöffnung 4 des Füllbehälters 1 in die Abdichtung miteinbezogen ist.

Mit Hilfe einer Heizvorrichtung 27, die in Form einer Schlange ausgebildet sein kann und unterhalb der Tauchtasse 28 angeordnet ist, kann im Winterbetrieb die Sperrflüssigkeit 7 beheizt werden, um ein Einfrieren zu verhindern. Die Beheizung kann mit Hilfe der Reaktorabgase erfolgen oder auch mit einem Wärmeträger, wie Öl, der durch die Schlange der

9542

Heizeinrichtung 27 hindurchgeschickt wird.

Am unteren Teil des Schüttbehälters 2 ist ein weiterer Tauchverschluß 9 vorgesehen, dessen umlaufender Tauchrand 10, der die Schüttöffnung 3 und die darin befindlichen Klappen 22 umgibt, während der Beladestellung des Schüttbehälters 2, wie in der Fig. 1 dargestellt, in die Sperrflüssigkeit 7 eingetaucht ist. Auf diese Weise wird ein Zutritt und ein Entweichen von Gas durch undichte Stellen des Klappenverschlusses 22 in der Schüttöffnung 3 vermieden.

Beim Entleeren des Schüttbehälters 2 in der in der Fig. 2 dargestellten Entladestellung ist die Füllöffnung 8 des Schüttbehälters durch den Deckel 11 abgedeckt. Zur Abdichtung kann auch hier ein Tauchverschluß 12 am Deckel vorgesehen sein, dessen umlaufender Rand 13 in eine am oberen Teil des Schüttbehälters 2 vorgesehene Sperrflüssigkeit 14 eingetaucht ist. Die Sperrflüssigkeit 14 umgibt die Füllöffnung 8. Vor dem Entleeren ist es sinnvoll, die nach dem Verschließen im Schüttbehälter 2 verbliebene Luft weitgehend durch Inertgas zu verdrängen. Nach dem Entleeren des Schüttbehälters 2 wird dieser wiederum in die in der Fig. 1 dargestellte Beladestellung gebracht und der Tauchverschluß 9 in die Sperrflüssigkeit 7 eingetaucht. Bevor der Deckel 11 für die Wiederbeladung abgehoben wird, kann der Schüttbehälter 2 nun zunächst ausgespült werden, um eventuell beim Entleeren in diesen gelangte Schadgase zu entfernen.

Um eine Brückenbildung im Füllbehälter 1 sowie im Schüttbehälter 2 zu verhindern, können in den schrägen Seitenwänden Räumstößel 15 und 16 bzw. 24 und 25 angeordnet sein, die in die Behälterräume wechselweise hineinbewegt werden können. Ferner kann am Füllbehälter 1 eine nicht näher dargestellte Füllstandsmeßeinrichtung vorgesehen sein, so daß in Abhängigkeit von der Füllstandsmessung die Zuführung des Gutes aus dem Schüttbehälter gesteuert werden kann. Insofern kann der Füllbehälter 1 als Zwischenbehälter wirken, durch den eine gesteuerte Zuführung des zu

9542

behandelnden Gutes gewährleistet wird.

Dadurch, daß der zusätzliche Schüttbehälter 2 vorgesehen ist, kann eine Kranbeschickung desselben über eine Schurre möglich sein. Der Greiferinhalt des Krans ist dabei auf das Schüttbehältervolumen abzustimmen. Insofern können dann störanfällige Zwischentransportmittel entfallen.

Um ein Abscheren von festen Teilen im Übergangsbereich zwischen dem Füllbehälter 1 und dem Zuführungsrohr 19 zu verhindern, besitzt der Stößel 17 eine Ausnehmung 18, die so bemessen ist, daß bei der vorderen Stößelstellung, welche in der Fig. 1 strichliert dargestellt ist, ein Abstand B zwischen dem Füllbehälter 1 und dem Zuführungsrohr 19 geschaffen wird. Zum anderen wird der Stößel 17 mit der Ausnehmung 18 nur soweit in den Zuführkanal hereingeschoben, daß zwischen der Vorderkante des Vollstößels und dem Zuführkanal ein Abstand A und im Bereich der Ausnehmung ein Freiraum B zwischen dem eingeschobenen Stößelteil und dem Zuführungskanal 19 verbleibt.

Durch eine in der Nähe dieses Übergangsbereiches 20 vorgesehene Abstreifeinrichtung 21 wird verhindert, daß das Gut, das sich bereits in dem zum Reaktor geführten Teil des Zuführungskanales befindet, vom zurückgeführten Stößel 17 mitgenommen wird. Es kann sich dabei um einen Rechen oder um eine Abschabkante oder einen Niederhalter handeln. Diese Abstreifeinrichtung wird während des Zurückziehens des Stößels in das Zuführungsrohr 19 eingeschoben. Mit dem Niederhalter können auch sperrige Teile, die wider Erwarten in den Füllbehälter gelangt sind und die Zufuhr des Gutes zum Reaktor behindern, so niedergedrückt werden, daß der Stößel sie stirnseitig erfassen kann, um sie so in den Reaktor zu schieben.

Beim Beschicken läßt sich die folgende Arbeitsweise der dargestellten Vorrichtung durchführen:

9542

Während der Schüttbehälter 2 sich in der in der Fig. 1 gezeigten Belade-stellung befindet, bewegt sich der Stößel 17 im Führungskanal 19 hin und her, wodurch das im Füllbehälter 1 befindliche Gut aus diesem allmählich entleert wird und in aufgelockertem Zustand dem Reaktor zugeführt werden kann. Wie eingangs schon erwähnt, läßt sich hierdurch der Wirkungsgrad des Reaktors bei der thermischen Behandlung des Gutes erheblich steigern, da der Reaktorraum besser genutzt wird. Mit Hilfe der nicht näher dargestellten Füllstandsmeßeinrichtung läßt sich der Füllungsgrad im Füllbehälter 1 feststellen und in Abhängigkeit davon der beladene Schüttbehälter 2, auf welchem der Deckel 11 gasdicht aufgesetzt ist, in die in der Fig. 2 dargestellte Entladestellung verbringen. Vor dem Entleeren kann die im Leerraum des Schüttbehälters 2 verbliebene Luft durch Inertgas verdrängt werden. Zur Entleerung des Schüttbehälters 2 werden die Klappen 22 geöffnet und das Gut in den als Zwischenbehälter wirkenden Füllbehälter 1 eingebracht. Die Klappen 22 werden wieder verschlossen und der Schüttbehälter wird in die Beladestellung zurückgebracht. Bevor der Deckel 11 abgehoben wird, kann der Schüttbehälter 2 noch ausgespült werden, um evtl. beim Entleerungsvorgang in diesen gelangte Schadgase zu entfernen. Anschließend kann der Schüttbehälter 2 dann wieder beladen werden.

Um den Schüttbehälter 2 zwischen seinen beiden Stellungen hin- und herbewegen zu können, können Schienenführungen, die der Einfachheit halber nicht näher dargestellt sind, vorgesehen sein. Aufgrund des am Schüttbehälter 2 vorgesehenen Tauchverschlusses 9 ist es notwendig, daß der Schüttbehälter vom Verbringen aus der Beladestellung in die Entladestellung um einen bestimmten Betrag angehoben wird. Diese Hubbewegung kann durch die Schienen oder durch ein ebenfalls nicht näher dargestelltes Kniehebelgelenk, welches am Schüttbehälter 2 beispielsweise über ein Parallellenkersystem angreift, ausgeführt werden.

9542

Patentansprüche

1.    Vorrichtung zum Beschicken eines Reaktors, insbesondere Drehrohrofens mit thermisch zu behandelndem Gut, insbesondere Abfällen, mit einem Zuführungskanal, durch welchen mittels eines hin- und herbewegten Stößels das über einen Füllbehälter in den Zuführungskanal eingebrachte Gut dem Reaktor zugeführt wird, und mit Dichtungseinrichtungen, die ein Eindringen und/oder Entweichen von Gasen in den bzw. aus dem Reaktor verhindern, d a d u r c h   g e k e n n z e i c h n e t ,   daß zusätzlich zum Füllbehälter (1) ein Schüttbehälter (2) vorgesehen ist, der zwischen einer über dem Füllbehälter (1) liegenden Entladestellung und einer seitlich vom Füllbehälter (1) liegenden Beladestellung hin- und herbewegbar ist und am Boden eine verschließbare Schüttöffnung (3) und einen sowohl die nach oben gerichtete Füllöffnung (4) des Füllbehälters (1) als auch die Schüttöffnung (3) des Schüttbehälters (2) umfassenden Tauchverschluß (5) aufweist, der mit einem umlaufenden Tauchrand (6) in eine die nach oben gerichtete Füllöffnung (4) des Füllbehälters (1) umfassende Sperrflüssigkeit (7) sowohl
beim Beladen des Schüttbehälters (2) mit dem thermisch zu behandelnden
Gut bei dessen geschlossener Schüttöffnung (3) und beim Entladen des
Gutes aus dem Schüttbehälter (2) durch die geöffnete Schüttöffnung (3) in
den Füllbehälter (1) bei gasdicht verschlossener, nach oben gerichteter
Beladeöffnung (8) des Schüttbehälters (2) als auch bei der Hin- und Herbewegung des Schüttbehälters (2) zwischen diesen beiden Stellungen eingetaucht bleibt.

2.  Vorrichtung nach Anspruch 1, dadurch gekennzeichnet, daß
der Schüttbehälter (2) einen weiteren, nur die Schüttöffnung (3) umfassenden Tauchverschluß (9) aufweist, dessen Tauchrand (10) in der Beladestellung des Schüttbehälters (2) in die Sperrflüssigkeit (7) eingetaucht ist.

3.  Vorrichtung nach Anspruch 1 oder 2, dadurch gekennzeichnet,
daß ein zum Verschließen der nach oben gerichteten Beladeöffnung (8)
des Schüttbehälters (2) vorgesehener Deckel (11) ebenfalls einen Tauchverschluß (12) aufweist, dessen umlaufender Tauchrand (13) in eine die Beladeöffnung (8) umfassende Sperrflüssigkeit (14) getaucht ist.

4.  Vorrichtung nach einem der Ansprüche 1 bis 3, dadurch gekennzeichnet, daß der Schüttbehälter (2) in entleertem Zustand vor dem
Wiederbeladen ausspülbar ist.

5.  Vorrichtung nach einem der Ansprüche 1 bis 4, dadurch gekennzeichnet, daß in den Schüttbehälter- und Füllbehälterraum aus den Seitenwänden Räumstößel (15, 16; 24, 25) die wechselweise betätigt werden,
bewegbar sind.

6.  Vorrichtung nach einem der Ansprüche 1 bis 5, dadurch gekennzeichnet, daß der Stößel (17) am vorderen Ende eine Ausnehmung (18)

9542

0033972

aufweist, durch die in der vorgeschobenen Stößelstellung zwischen dem obenliegenden Stößelteil und dem Zuführungskanal (19), in welchem der Stößel (17) in der vorgeschobenen Stellung sich befindet, ein Freiraum (B) verbleibt und zwischen der Vorderkante des Vollstößels und der gegenüberliegenden Kante des Zuführungskanals (19) ein Abstand (A) verbleibt.

7. Vorrichtung nach einem der Ansprüche 1 bis 6, dadurch gekennzeichnet, daß beim Zurückziehen des Stößels (17) aus der vorgeschobenen Stellung eine Stößelabstreifeinrichtung (21) in das Zuführungsrohr (19) eingeschoben ist.

8. Vorrichtung nach einem der Ansprüche 1 bis 7, dadurch gekennzeichnet, daß der Schüttbehälter (2) nach dem Beladen und vor dem Entleeren inertisiert ist.

9. Vorrichtung nach einem der Ansprüche 1 bis 8, dadurch gekennzeichnet, daß der Tauchverschluß (5) die Wirkung einer Explosionsklappe oder Berstmembrane besitzt.

10. Vorrichtung nach einem der Ansprüche 1 bis 9, dadurch gekennzeichnet, daß die Sperrflüssigkeit (7) des Tauchverschlusses (5) beheizbar ist.

9542

FIG.1

0033972

FIG.2

0033972

FIG.3

| Kategorie | Kennzeichnung des Dokuments mit Angabe, soweit erforderlich, der maßgeblichen Teile | betrifft Anspruch |
|---|---|---|
| | DE - C - 226 707 (TRUBIN)<br><br>* Insgesamt *<br><br>--- --- --- | 1,3 |
| | DE - A - 1 934 916 (STEINMÜLLER)<br><br>* Seite 1, Absätze 1-4; Seite 2, Absatz 1; Seite 4, letzter Absatz; Seite 5, Absatz 1; Figur 1 *<br><br>--- --- --- | 1 |
| | DE - A - 2 101 171 (ÖSTERREICHISCH-ALPINE MONTANGESELLSCHAFT)<br><br>* Seite 1; Seite 2, Absätze 1-3; Seite 3, Absatz 3; Seite 5, Absätze 1,2; Figuren 1 und 2 *<br><br>--- --- --- | 5 |
| | FR - A - 654 415 (VAN DER DOES DE BYE)<br><br>* Seite 1, Zeilen 45-62; Seite 2, Zeilen 1-5; Figuren 1 und 2 *<br><br>--- --- --- | 6,7 |
| | DE - C - 144 196 (TAUER)<br><br>* Insgesamt *<br><br>--- --- --- | 10 |
| | DE - C - 267 474 (LEASK)<br>DE - C - 174 506 (TAUER)<br>DE - C - 210 703 (QUOILIN)<br>DE - C - 149 687 (LIPPERT)<br>FR - A - 334 235 (GEORGE)<br><br>--- --- --- --- --- --- | |

**KLASSIFIKATION DER ANMELDUNG (Int. Cl.)**

F 23 G 5/00
F 27 D 3/10
B 01 J 8/00
B 65 G 69/18

**RECHERCHIERTE SACHGEBIETE (Int. Cl.)**

F 23 G
F 23 K
F 27 D
G 10 J
B 01 J
B 65 G

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27.04.1981 | PHOA |

EPA form 1503.1  06.78